# EUROPEAN PATENT APPLICATION

(11) **EP 3 554 056 A1**
(43) Date of publication of application: **16.10.2019**
(21) Application number: 18764633.6
(22) Date of filing: 02.02.2018
(51) Int. Cl.: H04M 1/02

(54) **COMMUNICATION TERMINAL**

(30) Priority: 07.03.2017 CN 201710132547
(71) Applicant: Guangdong OPPO Mobile Telecommunications Corp., Ltd., Dongguan, Guangdong 523860 (CN)
(72) Inventor: ZHANG, Haiping, Guangdong 523860 (CN)
(74) Representative: Manitz Finsterwald Patent- und Rechtsanwaltspartnerschaft mbB
(86) International application number: PCT/CN2018/075162
(87) International publication number: WO 2018/161750

(57) **Abstract**

Provided is a terminal including a display screen and a camera. The camera may be configured at the back of the display screen, the display screen includes a first display region and a second display region for information display, wherein the first display region is a transparent region; the camera may capture external images through the transparent display region. The terminal may configure the camera within the display region to omit a non-display region, so that an effect of large screen display may be achieved.

## Description

The present application claims priorities of Chinese Patent Application No. 201710132547.0, in the title of "Terminal", filed on March 7, 2017, in China National Intellectual Property Administration, the entire contents of which are hereby incorporated by reference in their entireties.

### TECHNICAL FIELD

The present disclosure relates to the field of communication technology, and in particular to a terminal.

### BACKGROUND

Terminals such as smart phones, tablet personal computers, notebook computers, and personal digital assistants may include user screens to display images or videos.

This type of terminals may include various functions and a function of display, such as photographing, user identification, fingerprint recognition, and the like. With the development of smart communication technologies, providing a large display screen has become a new topic.

Currently, a terminal usually includes the function of photographing, therefore, a non-display region needs to be defined for the terminal, and a hole for camera configuration may be defined within the non-display region. It can be seen that, when the size of the terminal is fixed, requirement of the non-display region for camera configuration significantly limits the display of the large screen of the terminal.

### SUMMARY OF THE DISCLOSURE

### TECHNICAL PROBLEMS

Embodiments of the present disclosure provide a terminal to achieve an effect of a large display screen.

### TECHNICAL SOLUTIONS

Other aspects of the present disclosure will be partially described and clarified in the following specification, or may be understood by practicing exemplary implementations of the present disclosure.

The present disclosure is to provide a terminal including a screen and a camera;
wherein the camera may be arranged on the back of the screen;
the screen may include a first display region and a second display region to display information, wherein the first display region is a transparent display region; and
the camera may capture images through the transparent display region.

Before detailed description of embodiments, it may be advantageous to define some words and phrases to be used. The terminology "include" and derived expressions thereof indicate to include but not limit to; the terminology "or" has an inclusive meaning, suggesting and/or; the phrases "associated with...", "in association with" and derived expressions thereof may indicate to include, being included, to interconnect with, to contain, being contained, to connect to or to connect with, coupling or being coupled with, to communicate with, to corporate with, to intersect, to place in parallel, to be contiguous, to adhere to, to have, to be characterized as, and the like; and the terminology "controller" indicates any device, system or a part thereof, which may control an least one operation, wherein the device may be implemented in hardware, firmware or software, or a combination of at least two of which. To be noted that, any function, which is associated with a certain controller, may be arranged in distribution or centralized layout locally or remotely. The present application provides definitions of some words and phrases, which should be understood by ordinary skilled in the art, and, in many circumstances (if not most cases), the definitions are suitable for the words and phrases in this field in the past and the future.

### BENEFICIAL EFFECT

The present disclosure is to provide a terminal to achieve an effect of a large display screen.

### BRIEF DESCRIPTION OF THE DRAWINGS

In order to make the technical solution described in the embodiments of the present disclosure more clear, the drawings used for the description of the embodiments will be briefly described. Apparently, the drawings described below are only for illustration but not for limitation. It should be understood that, one skilled in the art may acquire other drawings based on these drawings, without making any inventive work.

To more completely understand the present disclosure and beneficial effects thereof, it will be described by referring to appended figures, wherein the same code in the appended figures represents the same part.
FIG. 1 is an exploded isometric view of a terminal of the present disclosure.
FIG. 2 is a schematic view of a terminal of the present disclosure.
FIG. 3 is another schematic view of a terminal of the present disclosure.
FIG. 4 is a first schematic view of a display screen of a terminal of the present disclosure.
FIG. 5 is a sectional view of a terminal of the present disclosure.
FIG. 6 is a second schematic view of a display screen of a terminal of the present disclosure.
FIG. 7 is a third schematic view of a display screen of a terminal of the present disclosure.
FIG. 8 is a fourth schematic view of a display screen of a terminal of the present disclosure.
FIG. 9 is a fifth schematic view of a display screen of a terminal of the present disclosure.
FIG. 10 is still another schematic view of a terminal of the present disclosure.
FIG. 11 is another exploded isometric view of a terminal of the present disclosure.

### DETAILED DESCRIPTION

In order to more clearly understand the objective, the features and advantages of the present disclosure, the present disclosure will be described in details with reference to the drawings and a part but not all of the embodiments. It should be noted that, the embodiments obtained by skilled in the art without any creative endeavor based on the embodiments in the present disclosure should be within the scope of the present disclosure.

In the specification, claims and drawings of the present disclosure, terms such as "first", "second", "third" and the like (if they are used) are used to distinguish similar objects, but are not used to describe a certain sequence or order. It should be understood that, the objects described as such may be interchangeable where appropriate. In addition, terms "include", "contain" and any other derived expressions intend to indicate non-exclusive inclusion.

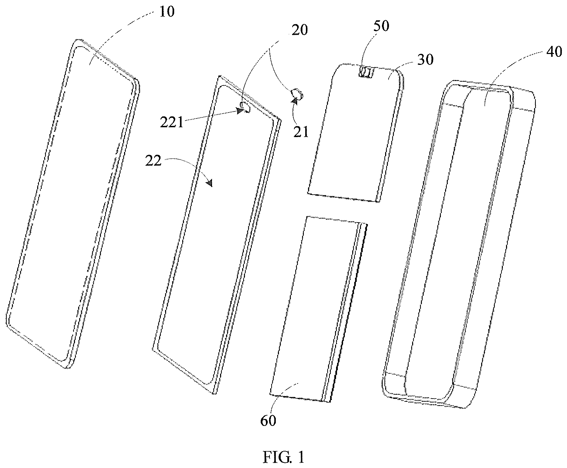

In the present disclosure, the described FIG. 1 to FIG. 11 and the embodiments used to describe principles of the present disclosure are for explanation only, but should not limit the scope of the present disclosure. Skilled in the art should understand principles of the present disclosure may be implemented in any properly arranged device. Exemplary implementations will be described in details, and embodiments of such implementations are shown in the figures. Further, terminals of exemplary embodiments will be described in details by referring to appended figures. The same code in the appended figures represents the same element.

Although terms such as "first", "second", and the like may be used to describe various embodiments, such components may not necessarily be limited to the above terms. The above terms are used to distinguish different components only. For example, without departing from the scope of the embodiments, a first element may be called as a second element, and similarly, a second element may be called as a first element. In the present disclosure, the term "and/or" include one of listed items or any and all of the combinations of the listed items.

Terms in the present disclosure are used for purposes of description, but not for showing principles of the present disclosure. Unless clearly different meanings are shown in the context, the expression used in a singular form covers the expression of a plural form. In the present disclosure, it should be understood that, terms such as "comprise", "include", "contain" and the like are intended to express any one or combination of features, numbers, steps, movements, components, and portions, but not intended to exclude possibility of existence or addition of one or more other features, numbers, steps, movements, components, and portions. The same code in the appended figures represents the same element.

The present disclosure is to provide a terminal including a display screen and a camera;
wherein the camera may be configured at the back side of the display screen;
the display screen may include a first display region and a second display region to display information, wherein the first display region is a transparent display region; and
the camera may capture images through the transparent display region.

In some embodiments, the first display region and the second display region may be spliced to display information.

In some embodiments, the first display region and the second display region may be configured to be coplanar.

In some embodiments, area of the first display region may be smaller than that of the second display region.

In some embodiments, the second display region may at least partially surround the first display region.

In some embodiments, the second display region may be configured to completely surround the first display region.

In some embodiments, the first display region may be on the top of the second display region.

In some embodiments, the first display region may be defined in the middle of the top of the display screen.

In some embodiments, the first display region may be defined on a side of the top of the display screen.

In some embodiments, the first display region may be defined at an intersection of a top edge of the screen and a side edge of the screen, and communicate with the top edge and the side edge of the screen.

In some embodiments, the second display region may define a function hole, which may be used for camera configuration, and the first display region may be defined within the function hole.

In some embodiments, a shape of the function hole may be one or more of circular, rounded rectangular and rounded squared.

In some embodiments, the second display region may be a non-transparent screen.

In some embodiments, the non-transparent screen may have an independent function of display.

In some embodiment, the non-transparent screen may include a display module and a backlight module, the function hole may be defined to extend through the display module and the backlight module.

In some embodiments, the backlight module may be configured to at least partially surround a light output surface of the camera.

In some embodiments, the camera may be arranged at the back side of the first display region.

In some embodiments, the first display region may be a transparent screen with an independent function of display.

In some embodiments, the transparent screen may be a transparent organic light-emitting diode (OLED) screen.

In some embodiments, the terminal may also include a printed circuit board and a case, wherein the printed circuit board may electrically connect to the display screen, and the display screen and the printed circuit board may be configured within the case.

FIG. 1 is an exploded isometric view of a terminal 100, wherein a smart phone is treated as the terminal 100 in FIG. 1, however, a tablet personal computer, a notebook computer, a personal digital assistant and the like may also be an embodiment.

According to the exemplary embodiment, the terminal 100 may include a cover 10, a display screen 20, a printed circuit board 30, a case 40, and a camera 50. The terminal 100 may further include a battery 60. The display screen 20 may be electrically connected to the printed circuit board 30 via a flexible printed circuit.

The cover 10 may be set in front of the display screen 20. The cover 10 may protect a front surface of the display screen 20, expose information shown on the screen 20 to the outside. In the present embodiment, "front" indicates a direction at the side of where the information displayed on the screen 20, and "back" indicates a direction opposite to the "front".

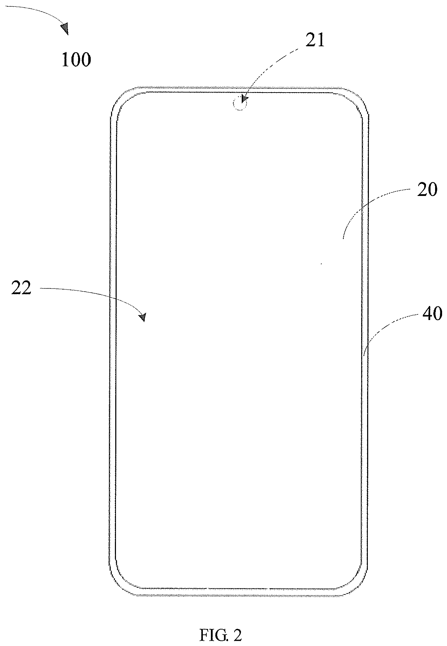

FIG. 2 illustrates a front view of the terminal 100 for the present exemplary embodiment.

Referring to FIG. 2 to FIG. 5, the display screen 20 may include a first display region 21 and a second display region 22 for information display.

The display screen 20 may be housed within the case 40. The case 40 may be composed of a single component or a plurality of components. The case 40 may be made of at least one of plastics, ceramics and metals.

The screen 20 may be used to display electric files, which may be images, texts and the like. The screen 20 may include a front surface for information display, and a back surface disposed opposite to the front surface.

In the present embodiment, the first display region 21 and the second display region 22 may coordinate to display a full image. For example, when displaying an image, the first display region 21 may display a part of the image, and the second display region 22 may display the rest part of the image. When the first display region 21 and the second display region 22 coordinate to display a full image, the first display region 21 may be used to display a small part of the image information, and the second display region 22 may be used to display the rest part of the image information.

Preferably, the first display region 21 and the second display region 22 may be spliced to display images, meaning that the images displayed by the first display region 21 and the images displayed by the second display region 22 may be spliced into a full image.

When the first display region 21 and the second display region 22 coordinate to display a full image, the image information may be assigned to the first display region 21 and the second display region 22 according to the size of each.

In some embodiments, the first display region 21 and the second display region 22 may display different images independently. For example, the first display region 21 may display a first image, and the second display region 22 may display a second image. As another example, the first display region 21 may display images with a fixed interface (such as time, network strength indicators and the like), and the second display region 22 may display images with variable interfaces.

In some embodiments, the first display region 21 and the second display region 22 may be defined on two screens, which means the display screen 20 may be formed by splicing the two display screens. The display screen 20 may include a main display screen and a secondary display screen, the first display region 21 may be realized on the secondary display screen, and the second display region 22 may be realized on the main display screen.

In some embodiments, the second display region 22 may define a function hole, which may be used for camera configuration, and the first display region 21 may be defined within the function hole. The camera 50 may be configured at the back side of the first display region 21.

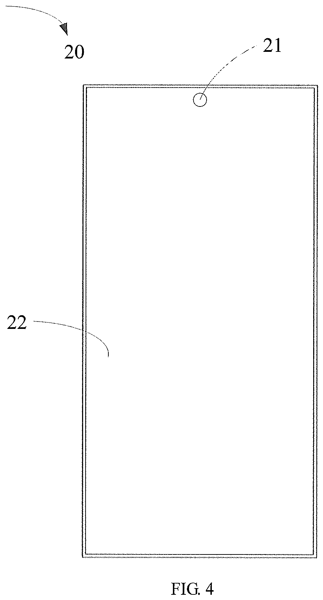

Referring to FIG. 4, the second display region 22 may define a function hole 221, and the first display region 21 may be defined within the function hole 221. Practically, the shape of the function hole 221 may be various, such as at least one of circular, rounded rectangular, rounded squared and the like. In the present embodiment, the contour shape of the first display region 21 may fit with the shape of the function hole 221, the first display region 21 is engaged within the function hole 221 and connects with the function hole 221 to ensure the integrity of the display screen 20. The first display region 21 may connect with the function hole 221. When the first display region 21 is a transparent screen, the side wall of the transparent screen may connect with the side wall of the function hole 221. Practically, the transparent screen and the second display screen may be configured as coplanar. The function hole 221 may be defined by a cutting process, such as computerized numerical control (CNC) cutting and the like.

The first display region 21 may be a transparent screen with an independent display function. For example, the screen may be a transparent OLED display screen. The second display region 22 may be a screen with an independent display function, such as a liquid crystal display (LCD) screen.

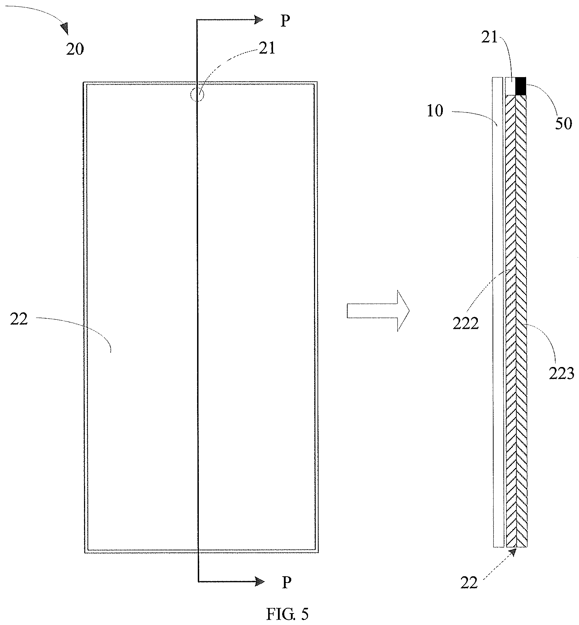

In some embodiment, referring to FIG. 5, which is a sectional view across the P-P line of the terminal shown in FIG. 4. The display screen 20 may include a plurality of layers. The second display region 22 may be a non-transparent screen, which may include a display module 222 and a backlight module 223. The first display region 21 may be a transparent OLED screen, and the function hole may extend through the display module 222 and the backlight module 223.

In order to save design space for the terminal, alternatively, the backlight module may be configured to at least partially surround a light output surface of the camera 50.

Referring to FIG. 5, when the camera 50 is configured at the back side of the first display region 21, an external light signal may pass through the first display region 21, injecting into the light output surface of the camera 50. When the terminal receives an instruction for photographing, the camera may sense light signals emitted from an object to be photographed and form images according to the sensed light signals, so that an image of the object may be captured. In the present embodiment, "front" indicates a direction at the side of where the information displayed on the screen 20, and "back" indicates a direction opposite to the "front".

Preferably, to improve quality of image display, the first display region 21 and the second display region 22 may be configured as coplanar, meaning that the surface for information display of the first display region 21 and the second display region 22 are defined on the same plane. For example, when thickness of the first display region 21 and the second display region 22 are different, it may be priority to guarantee information display surfaces of the first display region 21 and the second display region 22 are on the same plane.

In order to make the camera 50 to capture external images, the first display region 21 of the present embodiment may be a transparent region, so that external light signals may transmit through the transparent first display region 21 injecting into the light output surface of the camera, and the camera 50 may successfully capture external images. Transparency of the first display region 21 may be determined by skilled in the art or manufacturers.

Practically, when the first display region 21 is a transparent screen, and the second display region 22 is the main display screen, the transparent screen may be set within the function hole 221, and the transparent screen and the main display screen may be configured as coplanar, wherein the main screen and the transparent screen may splice into a full display screen 20. When users view from the front side of the display screen 20, it may feel like the display screen 20 is a screen formed by one integrated piece. The transparent screen may connect with the side wall of the function hole of the main screen, for example adhesive dispensing process may be performed in a gap between the transparent screen and the main screen, so that the transparent screen and the main screen may be connected tightly.

Of course, in some embodiments, the first display region 21 and the second display region 22 may be configured on different planes. For example, the plane of which the first display region 21 is defined may be slightly lower than the plane of which the second display region 22 is defined.

In some embodiments, area of the first display region 21 may be smaller than that of the second display region 22. Referring to FIG. 2, the area of the first display region 21 is significantly smaller than that of the second display region 22. The area of the first display region 21 is related to area of light output surface of the camera. For example, the larger the area of the light output surface of the camera 50, the larger the area of the first display region 21, so that the camera angle may be expanded as much as possible.

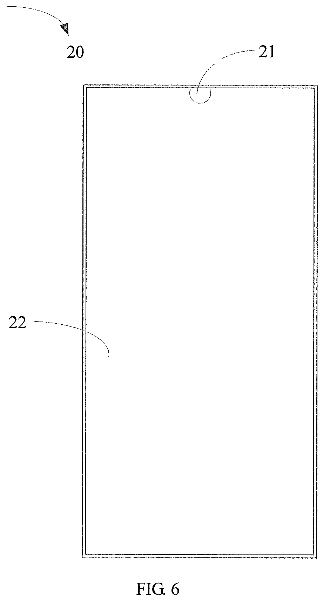

The second display region 22 may be configured to at least partially surround the first display region 22. For example, referring to FIG. 6, a part of the second display region 22 surrounds the first display region 21, and a part of the first display region 21 is surrounded by the second display region 22.

In some embodiments, the second display region 22 may completely surround the first display region 21, the first display region 21 may be enclosed by the second display region 22. For example, referring to FIG. 2, the first display region 21 is entirely enclosed by the second display region 22.

In order to improve display quality of images and simply manufacture processes of the display screens, in the present embodiment, the first display region 21 may be defined on the top of the screen 20. To be specific, the first display region 21 may be extremely close to the edge of the screen 20.

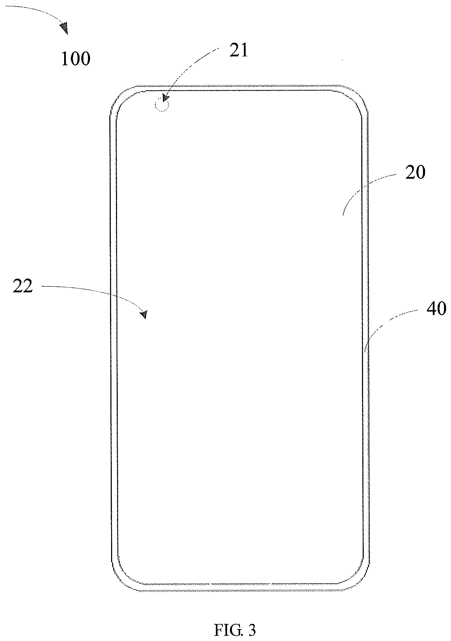

For example, referring to FIG. 2, the first display region 21 may be formed in the middle of the top of the screen 20, the first display region 21 may be extremely close to the edge of the screen 20. As another example, referring to FIG. 3, the first display region 21 may be defined on the side of the screen 20, and the first display region 21 may be extremely close to the edge of the screen 20.

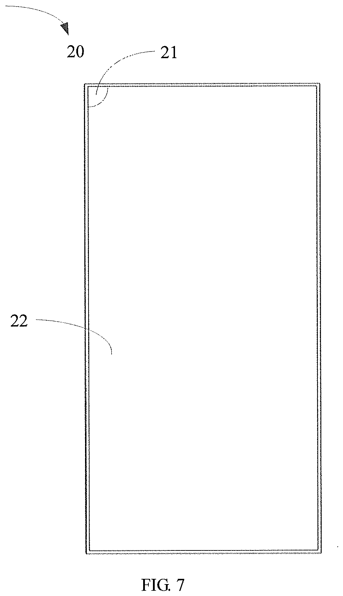

In some embodiments, to appeal the appearance of the screen, improve quality of image display and simplify manufacture processes of the screen, the first display region 21 may be defined at an intersection of the edge of the top of the screen 20 and the edge of the side of the screen 20, and communicate with the top and side edges of the screen 20. For example, referring to FIG. 7, the first display region 21 may be defined at an intersection of a top edge and a side edge of the display screen 20, and communicate with the top edge and the side edge of the display screen 20.

In order to make users to use the terminal camera to photograph easily, according to habits of using the terminal of the users, the first display region 21 may be configured in the middle of the top of the second display region 22, referring to FIG. 2. In some embodiments, the first display region 21 may be defined on the side of the top of the second display region 22, referring to FIG. 3.

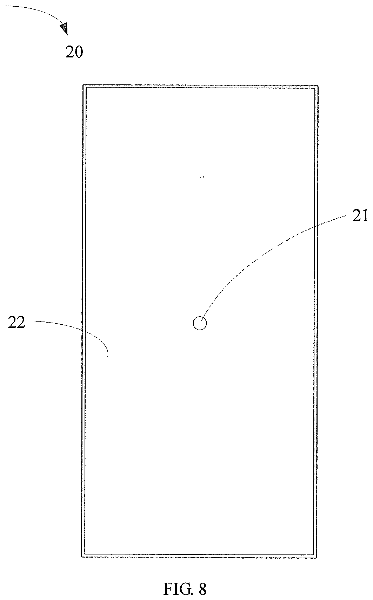

In some embodiments, referring to FIG. 8, the first display region 21 may be defined in the middle of the second display region 22 and completely enclosed by the second display region 22.

In some embodiments, the shape of the first display region 21 may be various, such as one or more of circular arced, rounded rectangular, and rounded squared. For example, referring to FIG. 2 to FIG. 5, the first display region 21 is circular, and the first display region 21 in FIG. 7 is circular arced.

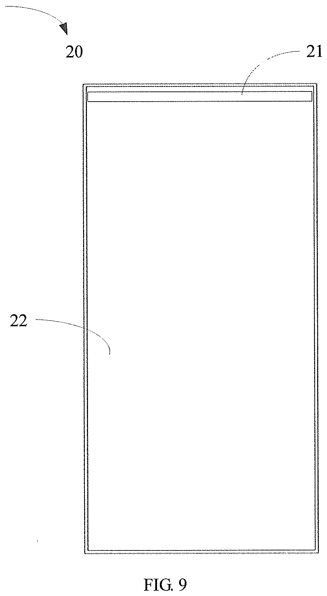

In some embodiments, the contour of the first display region 21 may be rectangular. For example, referring to FIG. 9, a rectangular first display region 21 is defined on the top of the second display region 22.

Preferably, in the mode of display, the first display region 21 may splice with the second display region 22 to display information, such as images and the like, and in the mode of photographing, the first display region 21 may be light transmissible to allow the photographing function of the camera. For example, in the photographing mode, the first display region 21 may become transparent so that external light signals may be transmitted to reach the light output surface of the camera to achieve image capture.

In some embodiments, in the mode of photographing, the first display region 21 may also splice with the second display region to display information. For example, when the first display region 21 and the second display region 22 splice to display information, external light signals may pass through the transparent first display region 21, injecting into the light output surface of the camera, so that the camera 50 may successfully capture external images.

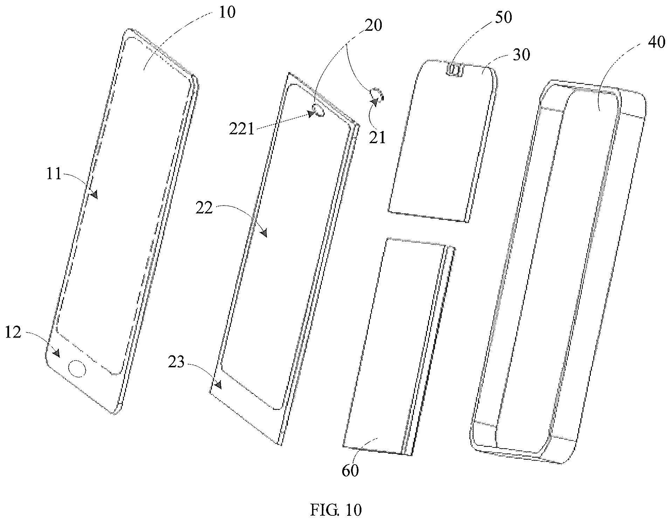

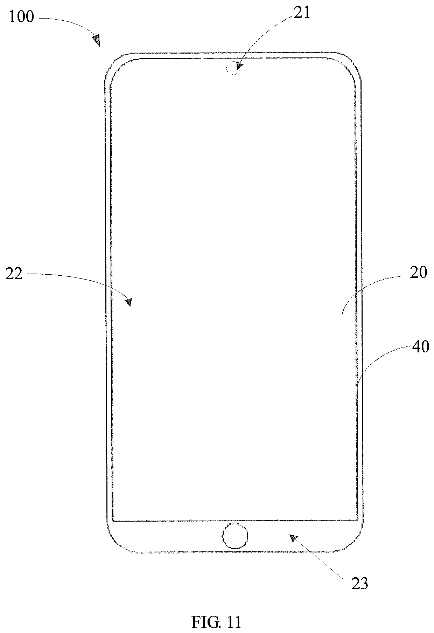

Referring to FIG. 10 and FIG. 11, the display screen 20 may further include a non-display region 23, which does not display information. The non-display region 23 may be defined at the outer side of the main display region 21. The non-display region 23 may be used for integrated circuit (IC) configuration, which may control information display on the screen 20 or configure functional elements such as proximity sensors, front cameras and the like.

An unexposed region 12 of the cover 10 may be defined in front of the non-display region 23 of the screen 20, and prevent the non-display region 23 of the screen 20 from being seen from the outside.

In some embodiments, referring to FIG. 10 and FIG. 11, the cover 10 may further include an exposed region 11 and an unexposed region 12. The exposed region 11 may allow the information displayed on the screen 20 to be exposed, and the unexposed region 12 may interrupt visibility of the screen 20. The unexposed region 12 may include a light shielding layer, such as a black pad layer, so that internal of the terminal 100 may be invisible. In some embodiments, the light shielding layer may be an ink layer.

The display screen 20 may define the transparent first display region 21, which may allow external light signals to transmit through, reaching the light output surface of the camera, so that the camera 50 may successfully capture external images. An independent non-display region may not be required specifically for the camera, occupation ratio of the display region on the display region 20 may be enlarged, so that the effect of large screen display may be achieved.

To promote understanding of one or more of the exemplary embodiments, embodiments shown in the appended figures are referred, and linguistic descriptions of these embodiments are used. However, the linguistic description are not intended to limit the scope of the present disclosure, the exemplary embodiments should cover all the embodiments that can be understood by ordinary skilled in the art.

Terms "components", "elements", "ways" and "configures" have general meanings, and should not be limited to mechanical or physical embodiments, but include software programs associated with processors and the like.

The embodiments shown in the present disclosure are exemplary, but are not intended to limit the scope of the present disclosure in any ways. To simplify, conventional electronic devices, control systems, software development and other functions of the systems (and elements of a single operating component of the systems) may not described in details. In addition, connective lines or elements shown in each of the figures represent functional relationships and/or physical or logical connection between the elements. To be noted that, actual devices may contain many substitutable or extra functional relationship, physical connections or logical connections. Further, none of the elements or components are inevitable for the present disclosure, unless an element is described as "necessary" or "critical". In the technical aspect, terms "include", "have" and the like in the present disclosure have an open meaning.

When describing concepts of the present disclosure, "a", "the" and the like (especially used in claims) should be understood to include a singular form and a plural form. In addition, unless specified or limited otherwise, a value range is a quick way to express each independent value within the range, and each of the values is within the scope of the present disclosure as if each of the values is stated independently. Further, unless specified or indicated oppositely in the context, the steps of all the methods may be performed in any appropriate sequence. A change of the present disclosure is not limited to the change of the sequences of the steps. Unless specified and limited otherwise, any and all of the embodiments or exemplary description (for example, "for example") in the present disclosure are for purposes of description only, not to limit the scope of the present disclosure. Without departing from the spirit and scope of the present disclosure, skilled in the art will understand various changes and adaptations easily.

It should be understood that, exemplary embodiments of the present disclosure is descriptive, but not for limitation. In each of the embodiments, descriptions for features or aspects should be appropriate for similar features or aspects of other embodiments. Although the present disclosure is described by referring to embodiments, skilled in the art are advised to make changes and transformations. The present disclosure is intended to cover the changes and transformations within the scope of the claims.

## Claims

1. A terminal, **characterized by** comprising a display screen and a camera, wherein
the camera is arranged at a back side of the display screen;
the display screen comprises a first display region and a second display region configured to display information, wherein the first display region is a transparent display region;
the camera is configured to capture images through the transparent display region.

2. The terminal according to claim 1, **characterized in that** the first display region and the second display region are configured to splice for information display.

3. The terminal according to claim 2, **characterized in that** the first display region and the second display region are configured to be coplanar.

4. The terminal according to claim 3, **characterized in that** an area of the first display region is smaller than that of the second display region.

5. The terminal according to claim 1, **characterized in that** the second display region at least partially surrounds the first display region.

6. The terminal according to claim 5, **characterized in that** the second display region is configured to surround the first display region to completely enclose the first display region.

7. The terminal according to claim 1, **characterized in that** the first display region is defined on a top of the second display region.

8. The terminal according to claim 7, **characterized in that** the first display region is defined in the middle of the top of the display screen.

9. The terminal according to claim 7, **characterized in that** the first display region is defined on the side of the top of the display screen.

10. The terminal according to claim 7, **characterized in that** the first display region is defined at an intersection of a top edge and a side edge of the display screen and communicates with the top edge and the side edge of the display screen.

11. The terminal according to claim 1, **characterized in that** the second display region defines a function hole configured to receive the camera, wherein the first display region is defined within the function hole.

12. The terminal according to claim 11, **characterized in that** a shape of the function hole is one or more of circular curved, rounded rectangular, and rounded squared.

13. The terminal according to claim 11, **characterized in that** the second display region is defined by a non-transparent display screen.

14. The terminal according to claim 13, **characterized in that** the non-transparent display screen has an independent display function.

15. The terminal according to claim 14, **characterized in that** the non-transparent display screen comprises a display module and a backlight module, wherein the function hole is defined to extend through the display module and the backlight module.

16. The terminal according to claim 15, **characterized in that** the backlight module is configured to at least partially surround a light output surface of the camera.

17. The terminal according to claim 1, **characterized in that** the camera is arranged at the back of the first display region.

18. The terminal according to claim 17, **characterized in that** the first display region is defined by a transparent screen with an independent display function.

19. The terminal according to claim 18, **characterized in that** the transparent screen is a transparent organic light-emitting diode (OLED) screen.

20. The terminal according to claim 19, **characterized in that** the terminal further comprises a printed circuit board and a case, wherein the printed circuit board electrically connects to the display screen, and the display screen and the printed circuit board are configured within the case.
